# EUROPÄISCHE PATENTSCHRIFT

(11) **EP 3 380 348 B1**
(45) Veröffentlichungstag und Bekanntmachung des Hinweises auf die Patenterteilung: **17.07.2019**
(21) Anmeldenummer: 16804718.1
(22) Anmeldetag: 21.11.2016
(51) Int. Cl.: B60H 3/06

(54) **LUFTREINIGUNGSSYSTEM UND VERFAHREN ZUM STEUERN DES LUFTREINIGUNGSSYSTEMS**
AIR PURIFICATION SYSTEM AND METHOD FOR CONTROLLING THE AIR PURIFICATION SYSTEM
SYSTÈME D'ÉPURATION D'AIR ET PROCÉDÉ DE COMMANDE DU SYSTÈME D'ÉPURATION D'AIR

(30) Priorität: 26.11.2015 DE 102015120500
(43) Veröffentlichungstag der Anmeldung: 03.10.2018
(73) Patentinhaber: Dr. Schneider Kunststoffwerke GmbH, 96317 Kronach (DE)
(72) Erfinder: SCHWARZ, Josef, 96317 Kronach (DE)
(86) Internationale Anmeldenummer: PCT/EP2016/078327
(87) Internationale Veröffentlichungsnummer: WO 2017/089303

(56) Entgegenhaltungen:
- WO-A1-2008/084432
- WO-A1-2015/062914
- US-A- 5 954 577

## Beschreibung

Es werden ein Luftreinigungssystem für ein Fahrzeug und ein Verfahren zum Steuern des Luftreinigungssystems beschrieben. Das Luftreinigungssystem weist mindestens einen ersten Strömungskanal zur Luftzufuhr für ein Belüftungsgerät, einen zweiten Strömungskanal, ein Fahrzeug-BUS-System, eine erste Sensoreinrichtung, Regeleinrichtungen und eine Steuereinheit auf, die mit der ersten Sensoreinrichtung, den Regeleinrichtungen und dem Fahrzeug-BUS-System verbunden ist.

Aus dem Stand der Technik sind verschiedene Vorrichtungen zur Luftreinigung in Kraftfahrzeugen bekannt. Diese sind so ausgebildet und angeordnet, dass Luft kontinuierlich über einen Filter geführt wird, um die in einem Fahrgastraum geführte Luft von Schadstoffen und anderen Verunreinigungen zu reinigen.

DE 10 2014 012 870 A1 offenbart einen Luftreiniger unter Verwendung von ultravioletten Strahlen, wobei der Luftreiniger ein Gehäuse mit einem Lufteinlass und einem Luftauslass, ein Gebläse, das im Inneren des Gehäuses angrenzend an den Lufteinlass angeordnet ist, eine Ultraviolett-Leuchtdioden-Einheit und eine Filtereinheit, die im Inneren des Gehäuses über dem Gebläse entlang eines Strömungsweg der Luft angeordnet sind, und eine Strömungssteueranordnung aufweist, die im Inneren des Gehäuses zwischen dem Gebläse und der Filtereinheit angeordnet ist. Dabei steuert die Strömungssteueranordnung den Luftstrom entlang des Strömungswegs der Luft zwischen dem Auslass des Gebläses und der Filtereinheit.

DE 20 2007 019 288 U1 offenbart ein System zur Luftreinigung unter Verwendung von Ozon und einem keramischen, porösen Katalysator. Das System weist ein Gehäuse, mindestens einen Einlass und einen Auslass, mindestens eine Photonenquelle, einen keramischen Kern und ein Fluidströmungsgerät auf, wobei die Photonenquelle stromaufwärts von dem keramischen Kern angeordnet ist.

Darüber hinaus offenbart DE 10 2004 027 354 A1 ein Breitbandfiltersystem zur Luftreinigung, dass aus einer Filterkassette mit einem Lufteintritt und einem Luftaustritt besteht, wobei schichtweise jeweils ein- oder mehrfach Partikelfilter, Wärme- und Ozonerzeuger, Superoxidationsanlagen, Feinfilter, Vliesgelege sowie Sensorsysteme angeordnet sind. WO 2008/084432 A1 offenbart ein alternatives Luftreinigungssystem.

Bei den aus dem Stand der Technik bekannten Einrichtungen erfolgt stets ein kontinuierliches Reinigen der Luft. Dabei hängt die Menge an gereinigter Luft stets davon ab, welche Luftmenge über die Filter geführt wird. Ein Problem ergibt sich bei den aus dem Stand der Technik bekannten Einrichtungen auch im Hinblick auf das maximale Reinigungsvermögen. Entweder müssen die Filter der Einrichtungen überdimensioniert werden oder es wird toleriert, dass keine vollständige bzw. erforderliche Reinigung erfolgt.

Vor allem neue Fahrzeuge emittieren über einen bestimmten Zeitraum flüchtige organische Verbindungen (VOC) und andere gesundheitsschädliche Substanzen. Um diese möglichst schnell und ohne Belastung für Insassen eines Fahrzeugs zu beseitigen, sind aus dem Stand der Technik bisher keine Systeme bekannt. Zwar sind im Stand der Technik Filtersysteme beschrieben worden, welche auch solche Verbindungen herausfiltern können, jedoch ist der Zeitraum, über welchen sich die Verbindungen im Fahrzeug halten, noch verhältnismäßig lang.

Es ist daher Aufgabe, die Nachteile des Stands der Technik zu beheben und ein Luftreinigungssystem sowie ein Verfahren zum Steuern eines Luftreinigungssystems anzugeben, wobei flüchtige organische Verbindungen und gesundheitsschädliche Substanzen sowie anderweitige Luftverunreinigungen gezielt herausgefiltert werden können und die Gefährdung für Fahrzeuginsassen reduziert ist.

Die Aufgabe wird durch ein Luftreinigungssystem mit den in Anspruch 1 angegebenen technischen Merkmalen und durch ein Verfahren mit den in Anspruch 10 angegebenen technischen Merkmalen gelöst. Vorteilhafte Weiterbildungen sind in den Unteransprüchen im Detail angegeben.

Bei einem Luftreinigungssystem für Fahrzeuge, welches die vorstehend genannte Aufgabe löst, mindestens aufweisend einen ersten Strömungskanal zur Luftzufuhr für ein Belüftungsgerät, einen zweiten Strömungskanal, ein Fahrzeug-BUS-System, eine erste Sensoreinrichtung, Regeleinrichtungen und eine Steuereinheit, die mit der ersten Sensoreinrichtung, den Regeleinrichtungen und dem Fahrzeug-BUS-System verbunden ist,
- weist der erste Strömungskanal einen Einlass für Luft aus dem Fahrzeuginnenraum und mindestens eine Filtereinheit zur Reinigung der Luft auf,
- ist der zweite Strömungskanal über die Regeleinrichtungen mit dem ersten Strömungskanal verbunden,
- ist ein erster Sensor der ersten Sensoreinrichtung in dem ersten Strömungskanal vor einer ersten Verbindungsstelle mit dem zweiten Strömungskanal angeordnet,
- ist ein zweiter Sensor der ersten Sensoreinrichtung in dem ersten Strömungskanal nach einer zweiten Verbindungsstelle mit dem zweiten Strömungskanal angeordnet, und
- steuert die Steuereinheit die Luftzufuhr in den ersten Strömungskanal, den zweiten Strömungskanal und zu dem Belüftungsgerät zumindest nach Maßgabe von über das Fahrzeug-BUS-System bereitgestellten Informationen, Messergebnissen von dem ersten Sensor und dem zweiten Sensor der ersten Sensoreinrichtung und dem Betriebszustand des Belüftungsgerätes.

Über den zweiten Strömungskanal kann bereits gereinigte Luft wieder zurück in den ersten Strömungskanal vor dem Bereich eingebracht werden, in welchem die mindestens eine Filtereinheit angeordnet ist. So kann beispielsweise nach Maßgabe des Messergebnisses über den zweiten Sensor der ersten Sensoreinrichtung eine Rückführung von gereinigter Luft durchgeführt werden, sodass gereinigte Luft mit ungereinigter Luft gemischt und damit eine bestimmte Luftqualität erreicht wird.

Die mindestens eine Filtereinheit kann in einem Abschnitt des ersten Strömungskanals zwischen der ersten Verbindungsstelle und der zweiten Verbindungsstelle angeordnet sein. In weiteren Ausführungsformen können zusätzliche Filtereinheiten auch an anderen Stellen in dem ersten Strömungskanal und sogar in dem zweiten Strömungskanal angeordnet sein.

Das Luftreinigungssystem kann in weiteren Ausführungen eine zweite Sensoreinrichtung aufweisen, wobei Sensoren der zweiten Sensoreinrichtung in dem Abschnitt mit der mindestens einen Filtereinheit angeordnet sind und die Steuereinheit die Luftzufuhr zusätzlich nach Maßgabe der Messergebnisse über die zweite Sensoreinrichtung steuert. Die Steuereinheit erhält in solchen Ausführungen bereits frühzeitig Rückmeldungen über den Reinigungsfortschritt entlang des Abschnitts mit der mindestens einen Filtereinheit. Demgemäß kann die Steuereinheit beispielsweise die Rückführung von gereinigter Luft nach Maßgabe von zu erreichenden Schwellenwerten für die Luftqualität genauer steuern.

Der Abschnitt mit der mindestens einen Filtereinheit kann mindestens einen Bereich aufweisen, in dem die durchströmende Luft mindestens einmal umgelenkt wird. Vorzugsweise ist der Abschnitt so ausgebildet, dass die durchströmende Luft mehrfach umgelenkt wird. Das Umlenken stellt sicher, dass es zu Verwirbelungen der Luft kommt und damit keine ungereinigte Luft den Abschnitt durchströmt, ohne dass eine Filterung durchgeführt wird.

Die mindestens eine Filtereinheit kann als eine Beschichtung auf mindestens einem Wandabschnitt aufgebracht sein. Alternativ dazu oder zusätzlich kann mindestens eine Filtereinheit als durchströmbares Element in dem ersten Strömungskanal angeordnet sein.

Mindestens das Belüftungsgerät kann Bestandteil einer Klimaanlage sein. Das Belüftungsgerät kann beispielsweise eine Fördereinrichtung wie einen Ventilator aufweisen, über welchen der Luftstrom steuerbar ist. Zudem kann das Belüftungsgerät Drosseleinrichtungen zum Steuern der Menge der ausgebbaren Luft sowie Ablenkmittel, wie Lamellen oder andere Luftleitelemente, aufweisen.

Der zweite Strömungskanal kann einen Auslass aufweisen, über den gereinigte Luft in den Fahrzeuginnenraum und/oder an die Umwelt ausgebbar ist. Der Auslass kann beispielsweise so angeordnet sein, dass gereinigte Luft nicht einer Luftauslassöffnung wie einem Luftausströmer, der mit einer Fahrzeugklimaanlage gekoppelt ist, zugeführt wird, sondern anderen Entlüftungsöffnungen, die ein diffuses Einströmen in einen Fahrgastraum ermöglichen. Zudem ist es möglich, gereinigte Luft notfalls auch über eine entsprechend ausgebildete druckabhängige Entlüftungsvorrichtung aus dem Fahrzeug herauszuführen.

Der erste Strömungskanal kann in Luftströmungsrichtung dem zweiten Sensor der ersten Sensoreinrichtung nachgeschaltet über eine weitere Regeleinrichtung mit einem dritten Strömungskanal verbunden sein, wobei über den dritten Strömungskanal Außenluft in den ersten Strömungskanal einbringbar ist. Nach Maßgabe der Messergebnisse der ersten Sensoreinrichtung und/oder der zweiten Sensoreinrichtung kann die Luftqualität der über das Belüftungsgerät ausgegebenen Luft weiter verbessert werden.

Die Sensoren der ersten Sensoreinrichtung und/oder der zweiten Sensoreinrichtung können insbesondere Sensoren zur Messung der Luftgüte und Luftqualität der durchströmenden Luft sein. Hierzu sind aus dem Stand der Technik verschiedene Sensoren bekannt, die bestimmte Bestandteile, wie zum Beispiel flüchtige organische Verbindungen und andere Schadstoffe, in Luftströmen messen und die Information an die Steuereinheit weitergeben können.

Ein die vorstehend beschriebene Aufgabe lösendes Verfahren zum Steuern eines Luftreinigungssystems der vorstehend beschriebenen Varianten weist mindestens die folgenden Schritte auf:
- Messen der Luftqualität über die Sensoren der ersten Sensoreinrichtung und/oder die Sensoren der zweiten Sensoreinrichtung und Übermitteln der Luftqualität an die Steuereinheit,
- Empfangen von Informationen durch die Steuereinheit über das Fahrzeug-BUS-System,
- Öffnen und Schließen der Regeleinrichtungen durch die Steuereinheit, und
- Aktivieren und Deaktivieren des Belüftungsgeräts und Verändern der angesaugten und ausgegebenen Luftmenge über das Belüftungsgerät durch die Steuereinheit,
wobei
- durch die mindestens eine Filtereinheit gereinigte Luft über den zweiten Strömungskanal in den ersten Strömungskanal zurückgeführt wird, wenn
   a) die über den zweiten Sensor der ersten Sensoreinrichtung und/oder die über die Sensoren der zweiten Sensoreinrichtung gemessene Luftqualität einen Schwellenwert unterschreitet, und/oder
   b) die über das Belüftungsgerät ausgegebene Luftmenge geringer ist, als die maximal ausgebbare Luftmenge, wobei über das Belüftungsgerät eine größere Luftmenge in den ersten Strömungskanal eingesaugt als über das Belüftungsgerät ausgegeben wird,
- durch die mindestens eine Filtereinheit gereinigte Luft aus dem zweiten Strömungskanal über den Auslass abgegeben wird,
- über den dritten Strömungskanal zugeführte Außenluft mit der mindestens teilweise gereinigten Luft aus dem ersten Strömungskanal gemischt wird, und/oder
- das Belüftungsgerät aktiviert wird, bevor das Fahrzeug gestartet wird, wobei die Steuereinheit über das Fahrzeug-BUS-System Informationen über den Startzeitpunkt erhält.

Das Luftreinigungssystem lässt sich insbesondere so steuern, dass Leistungsreserven und Zeitreserven genutzt werden können. Zeitreserven umfassen beispielsweise einen Zeitraum vor einem Start des Fahrzeugs, der über das Fahrzeug-BUS-System der Steuereinheit verschiedenartig übermittelt werden kann. Beispielsweise ist es möglich, dass mit dem Start einer Standheizung auch das Belüftungsgerät aktiviert wird, wobei ein Umwälzen von in dem Fahrgastraum befindlicher Luft erfolgt. Hierdurch kann eine Reinigung der Luft bereits erfolgen, bevor Personen in dem Fahrzeug aufgenommen sind. Zudem ist es möglich, dass eine Statusinformation an das Fahrzeug und beispielsweise an eine zentrale Fahrzeugsteuerung übermittelt wird, wobei die Statusinformation als Information über das Fahrzeug-BUS-System der Steuereinheit für das Luftreinigungssystem übermittelt wird. Eine Statusinformation umfasst beispielsweise Positionsdaten eines Fahrzeugführers. Beispielsweise werden die Positionsdaten mittels GPS von einem Mobiltelefon des Fahrzeugführers dazu verwendet, um dem Fahrzeug mitzuteilen, dass die Person sich in unmittelbarer Nähe oder in einem bestimmten Abstand zu dem Fahrzeug befindet. Hieraus kann errechnet werden, dass die Person sich dem Fahrzeug nähert und damit der Start des Luftreinigungsvorgangs gestartet werden kann. In anderen Ausführungsformen ist es auch möglich, dass zusätzlich oder alternativ bestimmte Startzeitpunkte vorgegeben werden können und/oder Startzeitpunkte erkannt werden. Startzeitpunkte können von der Steuereinheit "gelernt" werden, wobei bspw. das Fahrzeug an bestimmten Wochentagen stets zwischen 7:00 und 7:15 Uhr gestartet wird. Nach einer bestimmbaren Anzahl an Tagen kann die Steuereinheit den Betrieb des Belüftungsgeräts bereits um 6:45 Uhr starten, um Schadstoffe herauszufiltern. Wird das Fahrzeug um 7:30 nicht gestartet, kann der Reinigungsvorgang beendet werden. Ein solches Reinigen kann auch nur solange durchgeführt werden, wie eine bestimmte Schadstoffkonzentration gemessen wird. Dies umfasst auch eine Unterbindung von zeitlich vorgelagerten Reinigungsvorgängen, wenn vor allem bei Neufahrzeugen emittierte flüchtige organische Verbindungen nach bspw. 2 Monaten im Wesentlichen vollständig herausgefiltert wurden.

Leistungsreserven umfassen beispielsweise die Differenz zwischen einer maximalen Luftfördermenge und der tatsächlich eingestellten Luftfördermenge über eine Fahrzeugklimaanlage. Weist eine Fahrzeugklimaanlage beispielsweise vier Betriebsstufen auf, welche repräsentativ für bestimmte Luftströmungen sind, so kann über eine Person eine niedrige Strömungsgeschwindigkeit mit Stufe "2" eingestellt werden. Die Steuereinheit steuert das Belüftungsgerät bzw. die Fahrzeugklimaanlage jedoch so, dass eine Luftströmung mit Stufe "4" erfolgt. Hierbei kommt es zu einer stärkeren Umwälzung von Luft, sodass eine größere Luftmenge gereinigt werden kann. Über die Fahrzeugklimaanlage bzw. Komponenten eines Luftausströmers wie Schließklappe und andere kann jedoch in den Fahrgastraum nur ein Luftstrom mit der Stufe "2" bereitgestellt werden. In diesem Zustand ist es möglich, dass gereinigte Luft über den zweiten Strömungskanal, der als Bypass zum ersten Strömungskanal ausgebildet ist, zurückgeführt wird. Zusätzlich dazu oder alternativ kann gereinigte Luft über den zweiten Strömungskanal und den Auslass in den Fahrgastraum oder außerhalb des Fahrzeugs geleitet werden.

Zudem ist es möglich, dass in Abhängigkeit der gemessenen Luftqualität Frischluft von außerhalb des Fahrzeugs der zumindest teilweise gereinigten Luft beigemischt wird, sodass eine festlegbare Luftqualität erreicht wird.

In weiteren Ausführungen können in dem ersten Strömungskanal, dem zweiten Strömungskanal und/oder dem dritten Strömungskanal Fördereinrichtungen angeordnet sein, die eine Umwälzung von Luft bewirken. Diese Fördereinrichtungen sind mit der Steuereinheit verbunden und werden von der Steuereinheit angesteuert. Hierüber lässt sich der Luftstrom in den einzelnen Strömungskanälen genauer steuern und es kann eine gezieltere Luftreinigung durchgeführt werden.

Die Filtereinheit kann eine katalytische Beschichtung oder einen Katalysator aufweisen. Der Katalysator kann ein Fotokatalysator sein, der in Verbindung mit einer UV-Lichtquelle eine Reinigung der Luft von bestimmten Verunreinigungen durchführt.

Beschichtungen mit katalytischen Oberflächen zur Reinigung von Luft sowie Filtereinheiten mit einer Katalysator-Beschichtung zum Reinigen von Luft sind aus dem Stand der Technik bekannt. Hierbei kann in Abhängigkeit der zu erzielenden Ergebnisse eine entsprechende Auswahl an Materialien getroffen werden, um bestimmte Schadstoffe herauszufiltern. Zudem kann eine Anordnung von verschiedenen Materialien zum Filtern verschiedener Schadstoffe vorgesehen sein. Die Anordnung von verschiedenen Filtereinheiten kann in unterschiedlicher Weise erfolgen. Beispielweise können auch Filteraufbauten vorgesehen sein, die sich wiederholen.

Die Schicht des Katalysators bzw. Fotokatalysators kann aus Oxiden angefertigt werden, die aktiv bei der Verbrennung von CO und flüchtigen organischen Verbindungen sind. Zu diesen Oxiden gehören bspw. CuO, Co₃O₄, CoOₓ, NiO, Cr₂O₃, Fe₂O₃, MnO, MoO₃, ZnO, Fe₂O₃, WO₃, CeO₂, TiO₂, Al₂O₃, CeO₂, V₂O₅, ZrO₂, HfO₂, Dy₂O₃, Cr₂O₃ und Nb₂O₅. Als Katalysatoren können sowohl einzelne Oxide von Übergangsmetallen als auch Mischoxide verwendet werden. Die Katalysatoren mit Oxiden von Übergangsmetallen sind sowohl bei kompletter als auch selektiver Oxidation der flüchtigen organischen Verbindungen wirksam. Zusätzlich können folgende Elemente als Zusätze für die Katalysatoren verwendet werden: Pt, Pd, Rh. In einer Ausführungsform weist ein Fotokatalysator eine Schicht Lithiumniobat LiNbO₃ auf. Eine UV-Lichtquelle kann in weiteren Ausführungen durch ein LED-Leuchtmittel realisiert sein. Durch derartige Katalysatoren werden die flüchtigen organischen Verbindungen aus der Luft eines Fahrzeuginnenraums in neutrale Verbindungen umgewandelt. Zudem können hierüber auch Bakterien, Viren und Pilze aus der Luft entfernt werden.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine schematische Ansicht eines Luftreinigungssystems; und
- Fig. 2: eine schematische Ansicht eines weiteren Luftreinigungssystems.

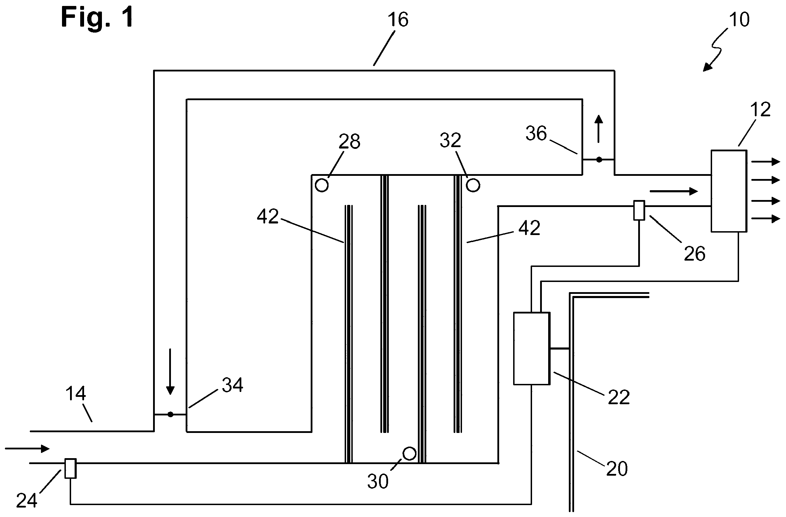

In den Zeichnungen mit gleichen Bezugszeichen versehene Teile entsprechen im Wesentlichen einander, sofern nichts anderes angegeben ist. Ferner wird darauf verzichtet, Bestandteile zu beschreiben, welche nicht wesentlich zum Verständnis der hierin offenbarten technischen Lehre sind. Fig. 1 zeigt eine schematische Ansicht eines Luftreinigungssystems 10. Das Luftreinigungssystem 10 weist einen ersten Strömungskanal 14 und einen parallel zum ersten Strömungskanal 14 angeordneten zweiten Strömungskanal 16 auf. Dem ersten Strömungskanal 14 wird ungereinigte Luft aus einem Kraftfahrzeug zugeführt. An seinem strömungsseitig abgewandten Ende ist an dem ersten Strömungskanal 14 ein Belüftungsgerät 12 angeordnet. Das Belüftungsgerät 12 sowie die anderen Komponenten können Teil eines Fahrzeugklimasystems sein.

Das in Fig. 1 dargestellte Luftreinigungssystem 10 weist ferner eine Steuereinheit 22 auf, die mit einem Fahrzeug-BUS 20 verbunden ist. Die Steuereinheit 22 ist zudem mit einem ersten Sensor 24 verbunden, der sich im Wesentlichen vor einer Verzweigungsstelle zwischen dem ersten Strömungskanal 14 und dem zweiten Strömungskanal 16 sowie einem Abschnitt des ersten Strömungskanals 14 mit einer Beschichtung 42 befindet.

Die Steuereinheit 22 ist mit einem zweiten Sensor 26 verbunden, der in dem ersten Strömungskanal 14 nach einer Verbindungsstelle zwischen dem ersten Strömungskanal 14 und dem zweiten Strömungskanal 16 sowie nach dem Abschnitt mit der Beschichtung 42 angeordnet ist.

In dem Abschnitt mit der Beschichtung 42 sind drei weitere Sensoren 28, 30 und 32 angeordnet. Die Sensoren 28, 30 und 32 sind ebenfalls mit der Steuereinheit 22 verbunden. Über die Sensoren 24, 26, 28, 30 und 32 kann die Luftqualität der durchströmenden Luft im Hinblick auf verschiedene Verunreinigungen ermittelt werden. Hierzu sind die Sensoren 24, 26, 28, 30 und 32 entsprechend ausgebildet. Die Sensoren 24 - 32 können beispielsweise bestimmte flüchtige organische Verbindungen und deren Konzentration messen. Darüber hinaus sind auch andere Verunreinigungen und Substanzen in der Luft nach Maßgabe und Ausbildung der Sensoren 24 - 32 messbar.

Im Bereich der ersten Verbindungsstelle zwischen dem ersten Strömungskanal 14 und dem zweiten Strömungskanal 16 ist eine als Regeleinrichtung zur Regelung der Luftströmung ausgebildete Drosselklappe 34 angeordnet. Die Drosselklappe 34 ist so ausgebildet, dass über den zweiten Strömungskanal 16 geführte Luft nur in der über den Pfeil gezeigten Richtung in den ersten Strömungskanal 14 strömen kann. In dem zweiten Verbindungsbereich zwischen dem ersten Strömungskanal 14 und dem zweiten Strömungskanal 16 ist eine zweite Drosselklappe 36 angeordnet, die so ausgebildet und angeordnet ist, dass gereinigte Luft in den zweiten Strömungskanal 16 nur in der über den Pfeil gezeigten Richtung einströmen kann. Die Drosselklappen 34 und 36 sind insbesondere steuerbare Drosselklappen, sodass nach Maßgabe von Steuerbefehlen über die Steuereinheit 22 diese die Luftzufuhr in den zweiten Strömungskanal und aus dem zweiten Strömungskanal 16 regeln.

Die Beschichtung 42 kann als katalytische Beschichtung ausgebildet sein und auch mit weiteren Einrichtungen zusammenwirken. So kann beispielsweise eine UV-Lichtquelle vorgesehen sein, die eine Reinigung der Luft für bestimmte Verunreinigungen durchführt. Anstelle einer Beschichtung 42 können auch Filtereinrichtungen angeordnet sein, welche von Luft durchströmt werden. In weiteren Ausführungsformen können sowohl durchströmbare Filterelemente als auch Beschichtungen 42 vorgesehen sein.

Die Beschichtung 42 ist in dem in Fig. 1 gezeigten Ausführungsbeispiel eine Katalysatorschicht, die aus einer der folgenden Oxiden gebildet wird: CuO, Co₃O₄, CoOₓ, NiO, Cr₂O₃, Fe₂O₃, MnO, MoO₃, ZnO, Fe₂O₃, WO₃, CeO₂, TiO₂, Al₂O₃, CeO₂, V₂O₅, ZrO₂, HfO₂, Dy₂O₃, Cr₂O₃ und Nb₂O₅. Als Katalysatoren können sowohl einzelne Oxide von Übergangsmetallen als auch Mischoxide verwendet werden. Zusätzlich können folgende Elemente als Zusätze für die Katalysatoren verwendet werden: Pt, Pd, Rh. Über solche Beschichtungen die flüchtigen organischen Verbindungen aus der Luft eines Fahrzeuginnenraums in neutrale Verbindungen umgewandelt. Zudem können werden auch Bakterien, Viren und Pilze aus der Luft entfernt.

Das Belüftungsgerät 12 kann beispielsweise einen Ventilator zum Umwälzen bzw. Ansaugen von Luft aus einem Fahrgastraum, eine Drosseleinrichtung wie eine Schließklappe und Luftleitelemente aufweisen. Das Belüftungsgerät 12 kann mit einem Luftausströmer gekoppelt sein oder einen Luftausströmer aufweisen.

Das Luftreinigungssystem kann beispielsweise so betrieben werden, dass dem ersten Strömungskanal 14 verunreinigte Luft zugeführt wird. Der Grad der Verunreinigung wird über den ersten Sensor 24 ermittelt und an die Steuereinheit 22 übertragen. Die Drosselklappen 34 und 36, welche als steuerbare Drosselklappen ausgebildet sind, bleiben zuerst geschlossen, sodass der Luftstrom vollständig über den Abschnitt mit der Beschichtung 42 geführt wird. Die zumindest teilweise gereinigte Luft strömt dann an dem zweiten Sensor 26 vorbei, wobei ebenfalls eine Erfassung der Luftreinigung durch Messen der Konzentration und Bestandteile von Verunreinigungen in der Luft durchgeführt wird. Diese Information wird ebenfalls wieder an die Steuereinheit 22 übermittelt. Nach Maßgabe dieser Informationen kann die Steuereinheit 22 die Drosselklappe 36 und die Drosselklappe 34 öffnen, sodass gereinigte Luft zurückgeführt wird und sich mit der verunreinigten Luft mischt. Dadurch ergibt sich eine Verbesserung der Luftqualität im Bereich des zweiten Sensors 26.

Zusätzlich zu dem Messen über den ersten Sensor 24 und den zweiten Sensor 26 kann auch während dem Durchströmen des Abschnitts mit der Beschichtung 42 ein Messen über die Sensoren 28, 30 und 32 erfolgen, sodass die Steuereinheit 22 den Fortschritt der Luftreinigung erhält und bereits frühzeitig die Drosselklappen 34 und 36 entsprechend ansteuern kann. Zudem können die Sensoren 28, 30 und 32 verschiedene Verunreinigungen ermitteln, wobei die entsprechend zugeordneten Bereiche verschiedene Filter oder Katalysatoren zur Beseitigung von entsprechend verschiedenen Verunreinigungen aufweisen.

In einer weiteren Betriebsart wird das Belüftungsgerät 12 so betrieben, dass die über das Belüftungsgerät 12 ausgegebene Luftmenge unterhalb einer maximal möglichen Luftmenge liegt. Die Steuereinheit 22, die ebenfalls mit dem Belüftungsgerät 12 verbunden ist, steuert dann eine Fördereinrichtung so an, dass ein maximaler Luftstrom angesaugt wird. Dementsprechend erhöht sich die Menge an angesaugter Luft, die in den ersten Strömungskanal 14 strömt. Damit jedoch für einen Fahrzeuginsassen kein erhöhter Luftstrom über das Belüftungsgerät 12 ausgegeben wird, kann eine Schließklappe eines Luftausströmers bspw. motorisch weiter verschlossen werden, als dies für den regulären Betrieb mit der entsprechend ausgewählten Stufe erforderlich ist. Dadurch, dass in den ersten Strömungskanal 14 mehr Luft strömt, kann eine größere Menge an Luft gereinigt werden. Damit zudem die Luftmenge, die über das Belüftungsgerät 12 ausgegeben wird, nicht größer ist als die von einem Fahrzeuginsassen eingestellte Luftmenge, können zusätzlich die Drosselklappe 36 und die Drosselklappe 34 geöffnet werden, damit eine Zirkulation von gereinigter Luft erfolgt.

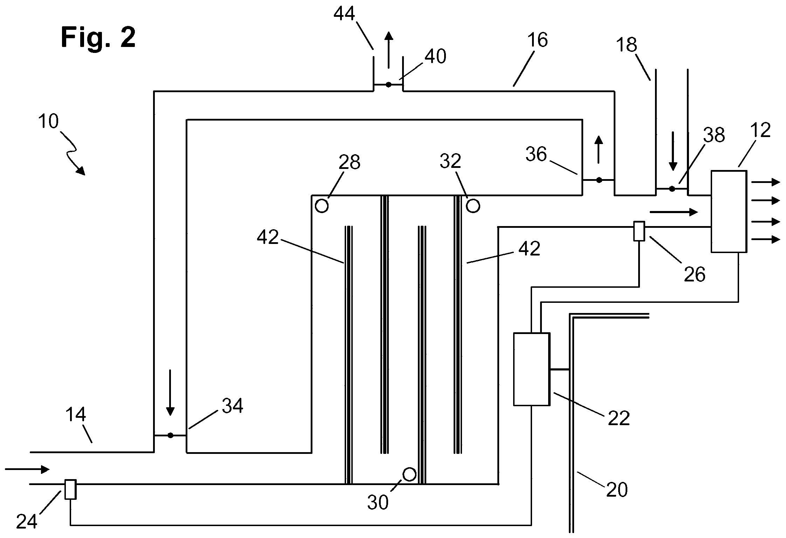

Fig. 2 zeigt eine weitere schematische Ansicht eines Luftreinigungssystems 10. Das in Fig. 2 gezeigte Luftreinigungssystem entspricht im Wesentlichen dem in Fig. 1 gezeigten Luftreinigungssystem 10, wobei zusätzlich ein dritter Strömungskanal 18 vorgesehen ist, der über eine Drosselklappe 38 mit dem ersten Strömungskanal 14 verbunden ist, wobei die Drosselklappe 38 ebenfalls eine steuerbare Drosselklappe 38 ist. Zudem weist der zweite Strömungskanal 16 einen Auslass 44 auf, der mit einer Drosselklappe 40, die ebenfalls steuerbar ausgebildet sein kann, geschlossen und geöffnet werden kann.

Der dritte Strömungskanal 18 ist dem zweiten Sensor 26 strömungsseitig nachgeschaltet und weist einen Einlass auf, über den Frischluft von außerhalb des Fahrzeugs zugeführt werden kann. Nach Maßgabe des Messergebnisses der gereinigten Luft über den zweiten Sensor 26 kann zusätzlich Frischluft zugeführt und beigemischt werden, damit die über das Belüftungsgerät 12 ausgegebene Luft eine bestimmte Luftqualität aufweist.

Zudem ist es über den Auslass 44 möglich, in den zweiten Strömungskanal 16 geführte und gereinigte Luft aus dem Luftreinigungssystem 10 abzuführen. Dies dient beispielsweise dazu, um die über das Belüftungsgerät 12 ausgegebene Luftmenge auf einem niedrigen Niveau zu halten, obwohl eine Fördereinrichtung des Belüftungsgeräts 12 einen höheren Luftstrom fördert. Die über den Auslass 44 ausgegebene Luft kann beispielsweise über Lüftungsschlitze, die nicht einem Luftausströmer zugeordnet sind, in den Fahrgastraum eines Fahrzeugs eingebracht werden. Zudem ist es möglich, die gereinigte Luft auch nach außen, das heißt aus dem Fahrzeug heraus, abzuführen.

Die in den Fig. 1 und 2 gezeigten Luftreinigungssysteme 10 zeichnen sich dadurch aus, dass eine größere Menge an Luft gereinigt werden kann, als über das Belüftungsgerät 12 ausgegeben wird. Im Stand der Technik ist es stets so, dass immer nur die Menge an Luft gereinigt werden kann, welche über einen Luftzuführkanal einer Belüftungseinrichtung zugeführt wird. Die hierin beschriebenen Luftreinigungssysteme 10 ermöglichen es jedoch, einen deutlich höheren Luftstrom den Luftreinigungssystem zuzuführen, ohne dass eine erhöhte Luftmenge über das Belüftungsgerät 12 ausgegeben wird, wobei es zu einer schnelleren Reinigung der Luft in einem Fahrzeug kommt. Insbesondere können bei Neufahrzeugen flüchtige organische Verbindungen viel schneller aus einem Fahrzeug herausgefiltert werden, als dies im Betrieb mit Lüftungseinrichtungen aus dem Stand der Technik möglich ist.

Ferner erlaubt das hierin beschriebene Luftreinigungssystem 10 eine Aktivierung der Belüftungseinrichtung 12 bereits vor dem Start des Kraftfahrzeugs, sodass eine Luftreinigung auch dann durchgeführt werden kann, wenn sich keine Personen in dem Fahrzeug befinden.

Hierzu kann die Steuereinheit 22 bspw. über den Fahrzeug-BUS 20 eine Information über die Aktivierung einer Standheizung erhalten. Diese Information dient dann als Startinformation bzw. Startsignal für den Betrieb des Luftreinigungssystems 10, wobei die Steuereinheit 22 das Belüftungsgerät 12, insbesondere eine Einrichtung zum Umwälzen von Luft wie einen Ventilator, aktiviert.

Die Steuereinheit 22 kann auch die Start-Zeitpunkte des Fahrzeugs in einem eigenen Speicher oder einem zentralen Fahrzeugspeicher abspeichern. Die Steuereinheit 22 kann dann bspw. nach dem "Erlernen" des Startzeitpunkts oder eines Startzeitfensters den Betrieb des Luftreinigungssystems 10 bereits 20 Minuten oder 30 Minuten vor dem eigentlichen Start des Fahrzeugs einleiten.

Auch können Ortsdaten eines Fahrzeugführers, bspw. mittels GPS, an das Fahrzeug und über den Fahrzeug-BUS 20 an die Steuereinheit 22 übertragen werden, so dass bereits das Luftreinigungssystem 10 gestartet wird, bevor der Fahrzeugführer beim Fahrzeug angekommen ist. Eine Kommunikation könnte bspw. über ein Smartphone oder einen entsprechend ausgebildeten Fahrzeugschlüssel erfolgen. Neben einer GPS-Ortsdatenübermittlung kann auch eine analoge Übertragungsmöglichkeit verwendet werden.

Zudem kann in weiteren nicht dargestellten Ausführungen von Luftreinigungssystemen in dem ersten Strömungskanal 14, dem zweiten Strömungskanal 16 und/oder dem dritten Strömungskanal 18 eine zusätzliche Fördereinrichtung zum Umwälzen von Luft vorgesehen sein, die mit der Steuereinheit 22 verbunden sind, so dass das Umwälzen von gereinigter Luft und ungereinigter Luft genauer gesteuert werden kann.

### Bezugszeichenliste

- 10: Luftreinigungssystem
- 12: Belüftungsgerät
- 14: Strömungskanal
- 16: Strömungskanal
- 18: Strömungskanal
- 20: Fahrzeug-BUS
- 22: Steuereinheit
- 24: erster Sensor
- 26: zweiter Sensor
- 28: Sensor
- 30: Sensor
- 32: Sensor
- 34: Drosselklappe
- 36: Drosselklappe
- 38: Drosselklappe
- 40: Drosselklappe
- 42: Beschichtung
- 44: Auslass

## Patentansprüche

1. Luftreinigungssystem für ein Fahrzeug, mindestens aufweisend einen ersten Strömungskanal (14) zur Luftzufuhr für ein Belüftungsgerät (12), einen zweiten Strömungskanal (16), ein Fahrzeug-BUS-System, eine erste Sensoreinrichtung, Regeleinrichtungen und eine Steuereinheit (22), die mit der ersten Sensoreinrichtung, den Regeleinrichtungen und dem Fahrzeug-BUS-System verbunden ist, wobei
- der erste Strömungskanal (14) einen Einlass für Luft aus dem Fahrzeuginnenraum und mindestens eine Filtereinheit zur Reinigung der Luft aufweist,
- der zweite Strömungskanal (16) über die Regeleinrichtungen mit dem ersten Strömungskanal (14) verbunden ist,
- ein erster Sensor (24) der ersten Sensoreinrichtung in dem ersten Strömungskanal (14) vor einer ersten Verbindungsstelle mit dem zweiten Strömungskanal (16) angeordnet ist,
- ein zweiter Sensor (26) der ersten Sensoreinrichtung in dem ersten Strömungskanal (14) nach einer zweiten Verbindungsstelle mit dem zweiten Strömungskanal (16) angeordnet ist, und
- die Steuereinheit (22) die Luftzufuhr in den ersten Strömungskanal (14), den zweiten Strömungskanal (16) und zu dem Belüftungsgerät (12) zumindest nach Maßgabe von über das Fahrzeug-BUS-System bereitgestellten Informationen, Messergebnissen von dem ersten Sensor (24) und dem zweiten Sensor (26) der ersten Sensoreinrichtung und dem Betriebszustand des Belüftungsgeräts (12) steuert.

2. Luftreinigungssystem nach Anspruch 1, wobei die mindestens eine Filtereinheit in einem Abschnitt des ersten Strömungskanals (14) zwischen der ersten Verbindungsstelle und der zweiten Verbindungsstelle angeordnet ist.

3. Luftreinigungssystem nach Anspruch 2, aufweisend eine zweite Sensoreinrichtung, wobei Sensoren (28, 30, 32) der zweiten Sensoreinrichtung in dem Abschnitt mit der mindestens einen Filtereinheit angeordnet sind und die Steuereinheit (22) die Luftzufuhr zusätzlich nach Maßgabe der Messergebnisse über die zweite Sensoreinrichtung steuert.

4. Luftreinigungssystem nach Anspruch 2 oder 3, wobei der Abschnitt mit der mindestens einen Filtereinheit mindestens einen Bereich aufweist, in dem die durchströmende Luft mindestens einmal umgelenkt wird.

5. Luftreinigungssystem nach einem der Ansprüche 1 bis 4, wobei die mindestens eine Filtereinheit als eine Beschichtung (42) auf mindestens einem Wandabschnitt aufgebracht und/oder die mindestens eine Filtereinheit als durchströmbares Element in dem ersten Strömungskanal (14) angeordnet ist.

6. Luftreinigungssystem nach einem der Ansprüche 1 bis 5, wobei mindestens das Belüftungsgerät (12) Bestandteil einer Klimaanlage ist.

7. Luftreinigungssystem nach einem der Ansprüche 1 bis 6, wobei der zweite Strömungskanal (16) einen Auslass (44) aufweist, über den gereinigte Luft in den Fahrzeuginnenraum und/oder an die Umwelt ausgebbar ist.

8. Luftreinigungssystem nach einem der Ansprüche 1 bis 7, wobei der erste Strömungskanal (14) in Luftströmungsrichtung dem zweiten Sensor (26) der ersten Sensoreinrichtung nachgeschaltet über eine weitere Regeleinrichtung mit einem dritten Strömungskanal (18) verbunden ist, wobei über den dritten Strömungskanal (18) Außenluft in den ersten Strömungskanal (14) einbringbar ist.

9. Luftreinigungssystem nach einem der Ansprüche 1 bis 8, wobei die Sensoren (24, 26; 28, 30; 32) der ersten Sensoreinrichtung und/oder der zweiten Sensoreinrichtung Sensoren (24, 26; 28, 30; 32) zur Messung der Luftgüte und Luftqualität der durchströmenden Luft sind.

10. Verfahren zum Steuern eines Luftreinigungssystems nach einem der Ansprüche 1 bis 9, aufweisend die folgenden Schritte:
- Messen der Luftqualität über die Sensoren (24; 26) der ersten Sensoreinrichtung und/oder die Sensoren (28, 30; 32) der zweiten Sensoreinrichtung und Übermitteln der Luftqualität an die Steuereinheit (22),
- Empfangen von Informationen durch die Steuereinheit (22) über das Fahrzeug-BUS-System,
- Öffnen und Schließen der Regeleinrichtungen durch die Steuereinheit (22), und
- Aktivieren und Deaktivieren des Belüftungsgeräts (12) und Verändern der angesaugten und ausgegebenen Luftmenge über das Belüftungsgerät (12) durch die Steuereinheit (22),
wobei
- durch die mindestens eine Filtereinheit gereinigte Luft über den zweiten Strömungskanal (16) in den ersten Strömungskanal (14) zurückgeführt wird, wenn
a) die über den zweiten Sensor (26) der ersten Sensoreinrichtung und/oder die über die Sensoren (28, 30; 32) der zweiten Sensoreinrichtung gemessene Luftqualität einen Schwellenwert unterschreitet, und/oder
b) die über das Belüftungsgerät (12) ausgegebene Luftmenge geringer ist, als die maximal ausgebbare Luftmenge, wobei über das Belüftungsgerät (12) eine größere Luftmenge in den ersten Strömungskanal (14) eingesaugt als über das Belüftungsgerät (12) ausgegeben wird,
- durch die mindestens eine Filtereinheit gereinigte Luft aus dem zweiten Strömungskanal (16) über den Auslass (44) abgegeben wird,
- über den dritten Strömungskanal (18) zugeführte Außenluft mit der mindestens teilweise gereinigten Luft aus dem ersten Strömungskanal (14) gemischt wird, und/oder
- das Belüftungsgerät (12) aktiviert wird, bevor das Fahrzeug gestartet wird, wobei die Steuereinheit (22) über das Fahrzeug-BUS-System Informationen über den Startzeitpunkt erhält.

## Claims

1. Air purification system for a vehicle, comprising at least a first flow channel (14) for feed of air for ventilation apparatus (12), a second flow channel (16), a vehicle bus system, a first sensor device, regulating devices and a control unit (22), which is connected with the first sensor device, the regulating devices and the vehicle bus system, wherein
- the first flow channel (14) comprises an inlet for air from the vehicle interior space and at least one filter unit for cleaning the air,
- the second flow channel (16) is connected with the first flow channel (14) by way of the regulating devices,
- a first sensor (24) of the first sensor device is arranged in the first flow channel (14) upstream of a first connecting point with the second flow channel (16),
- a second sensor (26) of the first sensor device is arranged in the first flow channel (14) downstream of a second connecting point with the second flow channel (16) and
- the control unit (22) controls the feed of air in the first flow channel (14), the second flow channel (16) and to the ventilating apparatus (12) at least in accordance with data provided by way of the vehicle bus system, measurement results from the first sensor (24) and the second sensor (26) of the first sensor device and the operating state of the ventilating apparatus (12).

2. Air purification system according to claim 1, wherein the at least one filter unit is arranged in a section of the first flow channel (14) between the first connecting point and the second connecting point.

3. Air purification system according to claim 2, comprising a second sensor device, wherein sensors (28, 30, 32) of the second sensor device are arranged in the section with the at least one filter unit and the control unit (22) controls the air feed additionally in accordance with the measurement results via the second sensor device.

4. Air purification system according to claim 2 or 3, wherein the section with the at least one filter unit has at least one region in which the throughflowing air is deflected at least once.

5. Air purification system according to any one of claims 1 to 4, wherein the at least one filter unit is coated as a layer (42) on at least one wall section and/or the at least one filter unit is arranged in the first flow channel (14) as an element which can be flowed through.

6. Air purification system according to any one of claims 1 to 5, wherein at least the ventilating apparatus (12) is a component of an air conditioning installation.

7. Air purification system according to any one of claims 1 to 6, wherein the second flow channel (16) has an outlet (44) by way of which purified air can be delivered into the vehicle interior space and/or to the environment.

8. Air purification system according to any one of claims 1 to 7, wherein the first flow channel (14) downstream of the second sensor (26) of the first sensor device in air flow direction is connected with a third flow channel (18) by way of a further regulating device, wherein outside air can be introduced into the first flow channel (14) by way of the third flow channel (18).

9. Air purification system according to any one of claims 1 to 8, wherein the sensors (24, 26; 28, 30; 32) of the first sensor device and/or the second sensor device are sensors (24, 26; 28, 30; 32) for measuring the air standard and air quality of the throughflowing air.

10. Method of controlling an air purification system according to any one of claims 1 to 9, comprising the following steps:
- measuring the air quality by way of the sensors (24; 26) of the first sensor device and/or the sensors (28, 30; 32) of the second sensor device and communicating the air quality to the control unit (22),
- receiving data through the control unit (22) via the vehicle bus system,
- opening and closing the regulating devices by the control unit (22) and
- activating and deactivating the ventilation apparatus (12) and changing the inducted and delivered air quantity by way of the ventilation apparatus (12) through the control unit (22),
wherein
- air purified by the at least one filter unit is led back to the first flow channel (14) by way of the second flow channel (16) when
a) the air quality measured by way of the second sensor (26) of the sensor device and/or the air quality measured by way of the sensors (28, 30; 32) of the second sensor device falls or fall below a threshold value and/or
b) the quantity of air delivered by way of the ventilation apparatus (12) is less than the maximum deliverable air quantity, wherein a larger air quantity is sucked into the first flow channel (14) by way of the ventilation apparatus (12) than is delivered by way of the ventilation apparatus (12),
- air purified by the at least one filter unit is delivered from the second flow channel (16) by way of the outlet (44),
- outside air fed by way of the third flow channel (18) is mixed with the at least partly purified air from the first flow channel (14) and/or
- the ventilation apparatus (12) is activated before the vehicle is started, wherein the control unit (22) obtains data about the start instant by way of the vehicle bus system.

## Revendications

1. Système d'épuration d'air pour un véhicule, présentant au moins un premier canal d'écoulement (14) pour l'amenée d'air pour un appareil de ventilation (12), un deuxième canal d'écoulement (16), un système BUS véhicule, un premier dispositif capteur, des dispositifs de régulation et une unité de commande (22), qui est reliée au premier dispositif capteur, aux dispositifs de régulation et au système BUS véhicule, dans lequel
- le premier canal d'écoulement (14) présente une entrée pour l'air de l'habitacle de véhicule et au moins une unité de filtration pour l'épuration de l'air,
- le deuxième canal d'écoulement (16) est relié au premier canal d'écoulement (14) par le biais des dispositifs de régulation,
- un premier capteur (24) du premier dispositif capteur est agencé dans le premier canal d'écoulement (14) avant un premier point de liaison au deuxième canal d'écoulement (16),
- un deuxième capteur (26) du premier dispositif capteur est agencé dans le premier canal d'écoulement (14) après un deuxième point de liaison au deuxième canal d'écoulement (16), et
- l'unité de commande (22) commande l'amenée d'air dans le premier canal d'écoulement (14), le deuxième canal d'écoulement (16) et vers l'appareil de ventilation (12) au moins en vertu d'informations mises à disposition par le biais du système BUS véhicule, de résultats de mesure du premier capteur (24) et du deuxième capteur (26) du premier dispositif capteur et de l'état de fonctionnement de l'appareil de ventilation (12).

2. Système d'épuration d'air selon la revendication 1, dans lequel l'au moins une unité de filtration est agencée dans une section du premier canal d'écoulement (14) entre le premier point de liaison et le deuxième point de liaison.

3. Système d'épuration d'air selon la revendication 2, présentant un deuxième dispositif capteur, dans lequel des capteurs (28, 30, 32) du deuxième dispositif capteur sont agencés dans la section avec l'au moins une unité de filtration et l'unité de commande (22) commande l'amenée d'air en plus en vertu des résultats de mesure par le biais du deuxième dispositif capteur.

4. Système d'épuration d'air selon la revendication 2 ou 3, dans lequel la section avec l'au moins une unité de filtration présente au moins une zone dans laquelle l'air traversant est dévié au moins fois.

5. Système d'épuration d'air selon l'une quelconque des revendications 1 à 4, dans lequel l'au moins une unité de filtration est montée en tant que revêtement (42) sur au moins une section de paroi et/ou l'au moins une unité de filtration est agencée en tant qu'élément pouvant être traversé dans le premier canal d'écoulement (14).

6. Système d'épuration d'air selon l'une quelconque des revendications 1 à 5, dans lequel au moins l'appareil de ventilation (12) fait partie d'une climatisation.

7. Système d'épuration d'air selon l'une quelconque des revendications 1 à 6, dans lequel le deuxième canal d'écoulement (16) présente une sortie (44), par le biais de laquelle l'air épuré peut être évacué dans l'habitacle de véhicule et/ou à l'environnement.

8. Système d'épuration d'air selon l'une quelconque des revendications 1 à 7, dans lequel le premier canal d'écoulement (14) est relié dans la direction d'écoulement d'air en aval du deuxième capteur (26) du premier dispositif capteur à un troisième canal d'écoulement (18) par le biais d'un autre dispositif de régulation, l'air extérieur pouvant être introduit dans le premier canal d'écoulement (14) par le biais du troisième canal d'écoulement (18).

9. Système d'épuration d'air selon l'une quelconque des revendications 1 à 8, dans lequel les capteurs (24, 26 ; 28, 30 ; 32) du premier dispositif capteur et/ou du deuxième dispositif capteur sont des capteurs (24, 26 ; 28, 30 ; 32) pour la mesure de la qualité d'air de l'air traversant.

10. Procédé de commande d'un système d'épuration d'air selon l'une quelconque des revendications 1 à 9, présentant les étapes suivantes :
- mesure de la qualité d'air par le biais des capteurs (24 ; 26) du premier dispositif capteur et/ou des capteurs (28, 30 ; 32) du deuxième dispositif capteur et transmission de la qualité d'air à l'unité de commande (22),
- réception d'informations par l'unité de commande (22) par le biais du système BUS véhicule,
- ouverture et fermeture des dispositifs de régulation par l'unité de commande (22), et
- activation et désactivation de l'appareil de ventilation (12) et modification de la quantité d'air aspirée et évacuée par le biais de l'appareil de ventilation (12) par l'unité de commande (22),
dans lequel
- par l'au moins une unité de filtration, l'air épuré est ramené dans le premier canal d'écoulement (14) par le biais du deuxième canal d'écoulement (16), lorsque
a) la qualité d'air mesurée par le biais du deuxième capteur (26) du premier dispositif capteur et/ou la qualité d'air mesurée par le biais des capteurs (28, 30 ; 32) du deuxième dispositif capteur passe sous une valeur seuil, et/ou
b) la quantité d'air évacuée par le biais de l'appareil de ventilation (12) est inférieure à la quantité d'air pouvant être évacuée au maximum, alors qu'une plus grande quantité d'air est aspirée dans le premier canal d'écoulement (14) par le biais de l'appareil de ventilation (12) qu'il n'en est évacué par le biais de l'appareil de ventilation (12),
- l'air épuré par l'au moins une unité de filtration est évacué du deuxième canal d'écoulement (16) par le biais de la sortie (44),
- l'air extérieur amené par le biais du troisième canal d'écoulement (18) est mélangé avec l'air au moins en partie épuré du premier canal d'écoulement (14), et/ou
- l'appareil de ventilation (12) est activé, avant que le véhicule soit démarré, l'unité de commande (22) recevant des informations sur le point de départ par le biais du système BUS véhicule.
